# EUROPEAN PATENT SPECIFICATION

(11) **EP 1 667 120 B1**
(45) Date of publication and mention of the grant of the patent: **16.06.2010**
(21) Application number: 05256915.9
(22) Date of filing: 08.11.2005
(51) Int. Cl.: G11B 7/249, C09B 45/00

(54) **Optical information recording medium comprising metal azo complexe dye**
Optisches Informationsaufzeichnungsmedium mit Azo-Metallkomplex Farbstoff
Support d'enregistrement optique d'informations avec colorant à base d'un complex azo-métal

(30) Priority: 08.11.2004 JP 2004324342
(43) Date of publication of application: 07.06.2006
(73) Proprietor: Taiyo Yuden Co., Ltd., Tokyo 110-0005 (JP)
(72) Inventor: Uchida, Mamoru, Taito-ku Tokyo 110-0005 (JP); Okitsu, Isao, Taito-ku Tokyo 110-0005 (JP); Kodaira, Takuo, Taito-ku Tokyo 110-0005 (JP)
(74) Representative: Jackson, Richard Eric

(56) References cited:
- EP-A- 0 996 123
- DE-A1- 10 305 925
- US-B1- 6 214 519
- PATENT ABSTRACTS OF JAPAN vol. 2003, no. 12, 5 December 2003 (2003-12-05) & JP 2004 203979 A (MATSUSHITA ELECTRIC IND CO LTD; YAMADA CHEM CO LTD), 22 July 2004 (2004-07-22)
- PATENT ABSTRACTS OF JAPAN vol. 2003, no. 12, 5 December 2003 (2003-12-05) & JP 2004 042504 A (MATSUSHITA ELECTRIC IND CO LTD), 12 February 2004 (2004-02-12)

## Description

### Field of the Invention

The present invention relates to an optical information recording medium. In particular, the invention relates to an optical information recording medium comprising a light-transmitting substrate having thereon an optical recording layer containing at least a light absorbing substance constituted of a dye, etc. and a light reflecting layer made of a metal film, etc., which can undergo writing and reproduction with a high density and at a high speed and which can be suitably used even at the time of low speed.

### Description of Related Art

At present, write-once optical information recording media using an organic dye compound corresponding to semiconductor lasers having a wavelength of from 640 to 680 nm (for example, from 650 to 665 nm) in an optical recording layer, such as DVD-R and DVD+R, are being developed. In comparison with conventional CD-R having a track pitch of 1.6 µm and a storage capacity of from 650 to 600 MB, these optical information recording media such as DVD-R and DVD+R have a narrower track pitch of 0.74 µm and a very high density of 4.7 GB. In addition, with respect to the recording speed, the reference linear velocity of CD-R is from 1.2 to 1.4 m/s, whereas the reference linear velocity of DVD-R/+R is very high at 3.49 m/s. Dyes which are adaptive with such high speed are demanded.

In addition, in optical information recording media using such an organic dye compound in the optical recording layer, it is demanded to secure recording and reproducing characteristics over a wide region of recording speed from the time of low speed to the time of high speed. However, at present, optical information recording media which are thoroughly satisfactory with respect to recording and reproducing characteristics from the time of low speed to the time of high speed are not known.

In high-speed recording, because of the high recording power, the quantity of heat as generated at the time of recording or the quantity of heat per unit time becomes large and a problem of thermal strain is liable to be actualized, resulting in causing scattering in a recording pit. That is, in usual optical information recording media, since the recording power is high in high-speed recording, a recording pit becomes too large. As a result, the degree of modulation becomes too high.

In particular, in DVD-R, a region for confirming address information called a land pre-pit (LPP) is provided, and it is necessary to secure this LPP signal before and after recording. However, when an excessively large recording pit is formed, it is impossible to take a sufficient AR (aperture ratio; an index for a ratio in amplitude degradation) which is a recording index of LPP, resulting in a problem that an LPP signal cannot be secured.

Incidentally, AR is a rate (%) of an LPP signal in a portion where a longest recording pit is present to an LPP signal in a portion where no recording pit is present, and according to the standards on DVD-R, it is required that the AR is 15 % or more.

Accordingly, it is necessary that in high-speed recording, the quantity of heat as generated at the time of recording is controlled at low levels while controlling a recording power.

On the other hand, however, when, for example, the film thickness of a recording layer is made thinner for the purpose of controlling a recording power at low levels at the time of high-speed recording, a sufficiently large recording pit is hardly formed at the time of low-speed recording, resulting in a problem that a degree of modulation cannot be secured.

In order to secure an LPP signal for a large recording pit, for example, it may be considered to increase the LPP itself. However, when the LPP is increased, its LPP signal also leaks into information at the time of unrecording or at the time of recording, resulting in another problem that an error becomes too large.

Accordingly, in order to secure an LPP signal, not only scattering in the size of a recording pit due to a difference of the recording speed must be controlled at low levels, but also recording must be achieved such that a recording pit having a sufficient size can be formed at the time of low-power recording, whereas the AR is satisfied with the standards at the time of high-power recording. However, what kind of material is suitable for such a recording material (organic dye material) has not been grasped at all.

Moreover, an output power itself of semiconductor laser is limited, and therefore, dye materials with a high sensitivity which are adapted to high-speed recording are demanded. Furthermore, it is thought that a demand for high speed will be more required following practical use of a next-generation disk (for example blue-ray, HD, and DVD).
Patent Document 1: JP-A-5-15612

### SUMMARY OF THE INVENTION

In view of the foregoing various problems, the invention has been made and is aimed to provide an optical information recording medium which is adaptive with recording speed of a wide range of from conventional low-speed recording (1-fold of the reference linear velocity) to high-speed recording (for example, 16-fold of the reference linear velocity).

Also, the invention is aimed to provide an optical information recording medium which is able to secure a degree of modulation at the time of low-speed recording (one-fold of the reference linear velocity) (it is considered that the degree of modulation is required to be 50 % or more according to the standards of DVD) and to achieve control such that the degree of modulation at the time of high-speed recording (for example, 16-fold of the reference linear velocity) does not become excessively large.

Also, the invention is aimed to provide an optical information recording medium which is able to radiate heat as generated at the time of recording effectively and rapidly and to reduce a rate of an increase in the degree of modulation even when a recording power is large.

Also, the invention is aimed to provide an optical information recording medium which is able to secure an LPP signal before and after recording and to take a satisfactory AR and which is satisfactory with recording characteristics from low-speed recording to high-speed recording.

That is, taking into consideration control of heat as generated by a recording power in recording on an optical recording layer, the present inventors have found that there are prescribed mutual relations among an improvement of heat radiation characteristics (in particular, an improvement of heat radiation characteristics via a light reflecting layer), a thermal decomposition temperature (thermal decomposition initiation temperature) and a degree of modulation or a ratio in degree of modulation between high-speed recording and low-speed recording of a dye and further between light absorbing ability (extinction coefficient) k and a heating value in a thin film state in recording and reproducing wavelengths and recording sensitivity. Then, the present inventors have paid attention on the matter that by optimally controlling the thermal decomposition temperature and the heating value and the light absorbing ability (extinction coefficient) k of a dye, an optical information recording medium which is adaptive with a wide recording speed region of from a slowest speed to a fastest speed with respect to the use speed (for example, from the reference linear velocity (1x speed) to 16-fold speed (16x speed)), especially an optical information recording medium suitable for 16x speed DVD, and more preferably DVD-R can be obtained. Specifically, the invention is concerned with an optical information recording medium comprising a substrate having light transmitting properties and having a pre-groove formed thereon; an optical recording layer containing a dye capable of absorbing laser light as provided on the substrate; and a light reflecting layer capable of reflecting the laser light as provided on the optical recording layer, the optical information recording medium being able to record optically readable information by irradiating the optical recording layer with the laser light through the substrate, wherein a ratio of a degree of modulation at a maximum speed of recording speed by the laser light to a degree of modulation at a minimum speed of recording speed by the laser light (degree of modulation at the time of maximum-speed recording/degree of modulation at the time of minimum-speed recording) is from 1.1 to 1.7 wherein said maximum speed is 16-times the reference linear velocity and said minimum speed is the reference linear velocity.

The ratio of a degree of modulation at a maximum speed of recording speed by the laser light to a degree of modulation at a minimum speed of recording speed by the laser light (degree of modulation at the time of maximum-speed recording/degree of modulation at the time of minimum-speed recording) can be made in the range of from 1.1 to 1.6.

A ratio of a cross-sectional area occupied by the optical recording layer to a cross-sectional area of the pre-groove in a cutting plane of the optical information recording medium in the diameter direction (a dye ratio within a groove) is in the range of from 57 % to 63 %.

The optical recording layer can have a thermal decomposition initiation temperature of from 190 to 260°C and a heating value of from 20 to 150 cal/g.

The optical recording layer can have an extinction coefficient k of not more than 0.2 in recording and reproducing wavelengths of the laser light.

A dye compound represented by the following structural formula is used as the dye.

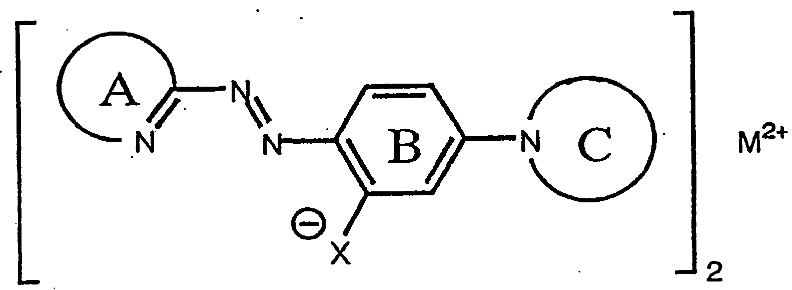

In the formula, ring A represents a heterocyclic ring which is formed together with the carbon atom and the nitrogen atom bonded thereto (preferably a monocyclic 5-6 membered or a bicyclic 9-13 membered aromatic heterocyclic ring containing 1, 2, 3 or 4 heteroatoms selected from O, S or N); ring B represents an optionally substituted benzene ring (where preferred substituents are C₁₋₄alkyl, preferably methyl); ring C represents a heterocyclic ring containing the nitrogen atom bonded thereto (preferably a 5-13 membered heterocyclic ring containing 1, 2, 3 or 4 heterotaoms selected from O, S or N) and may form a bond together with the ring B; and X represents a group which can have active hydrogen (hydrogen anion), the dye compound representing a metal complex in which one molecule of a divalent cationic metal ion (M²⁺) is bonded to two molecules of this azo dye.

Ring A may be optionally substituted. Preferred substituents are selected from -CN, C₁₋₄alkyl (preferably methyl), halo (preferably Br) and trihalomethyl (preferably trifluoromethyl). The term "halo" includes F, Cl, Br and I.

Ring C may be optionally substituted. Preferred substituents are C₁₋₄alkyl, preferably methyl.

In the optical information recording medium according to the invention, by optimally controlling the thermal decomposition temperature and the heating value and the light absorbing ability (extinction coefficient) k of the dye within the optical recording layer at the time of recording, an optical information recording medium which is adaptive with a wide recording speed region of from the reference linear velocity (1x speed) to 16-fold speed (16x speed) and which properly secures an LPP signal and a degree of modulation.

### BRIEF DESCRIPTION OF THE DRAWINGS

Fig. 1 is an enlarged cross-sectional view of the principal part of an optical information recording medium 1 according to one embodiment of the invention.
Fig. 2 is a graph to show the results of measurement of the shape of the side of a light reflecting layer 4.
Fig. 3 is a graph to show the shape of a cross section of the light reflecting layer 4 resulting from approximation of a curve obtained in Fig. 2 by a straight line.
Fig. 4 is a drawing to show a calculation expression of each of a dye ratio within a groove and a light reflecting layer ratio within a groove.
Fig. 5 is a graph to show a DC jitter and a dye ratio within a groove.
Fig. 6 is a graph to show a relation between a thermal decomposition initiation temperature of a dye (dye thermal decomposition initiation temperature) and a ratio in degree of modulation between 16-fold speed and one-fold speed.
Fig. 7 is a graph to show a relation between an extinction coefficient k of a dye and a recording power (at the time of 16-fold speed recording).
Fig. 8 is a graph to show a relation between a heating value of a dye and a recording sensitivity (recording power) (at the time of 16-fold speed recording).
Fig. 9 is an explanatory drawing to show a general structural formula of an organic dye material (azo dye) which is satisfied with ranges regarding the thermal decomposition initiation temperature, the heating value, and the extinction coefficient k in the optical information recording medium 1 of the invention.
Fig. 10 is an explanatory drawing enumerating specific examples of "A" in Fig. 9.
Fig. 11 is an explanatory drawing enumerating specific examples of "B" in Fig. 9.
Fig. 12 is an explanatory drawing enumerating specific examples of "X" in Fig. 9.
Fig. 13 is an explanatory drawing enumerating specific examples of "C" in Fig. 9.
Fig. 14 is an explanatory drawing enumerating specific examples of "M²⁺" in Fig. 9.
Fig. 15 is an explanatory drawing to show a structural formula of a dye compound I (azo dye) as used in Example 1.
Fig. 16 is an explanatory drawing to show a structural formula of a dye compound II (azo dye) as used in Comparative Examples 1 and 2.

### DETAILED DESCRIPTION OF THE PREFERRED EMBODIMENTS

In the invention, since a ratio of a degree of modulation at a maximum speed of recording speed by laser light to a degree of modulation at a minimum speed of recording speed by laser light (degree of modulation at the time of maximum-speed recording/degree of modulation at the time of minimum-speed recording) is regulated at from 1.1 to 1.7, it is possible to realize an optical information recording medium which can be suitably used even at a fastest use speed (16x speed), which can obtain a satisfactory AR (aperture ratio; an index for a ratio in amplitude degradation) even in the case of applying especially to DVD-R, and which is adaptive with a recording linear velocity of a wide range of from low speed to high speed.

The optical information recording medium of the invention is especially suitably applied to DVD-R, but it should not be construed that the invention is limited thereto. For example, the optical information recording medium of the invention can be applied to CD-R, DVD+R, blue-ray, HD DVD, and the like.

### EMBODIMENTS

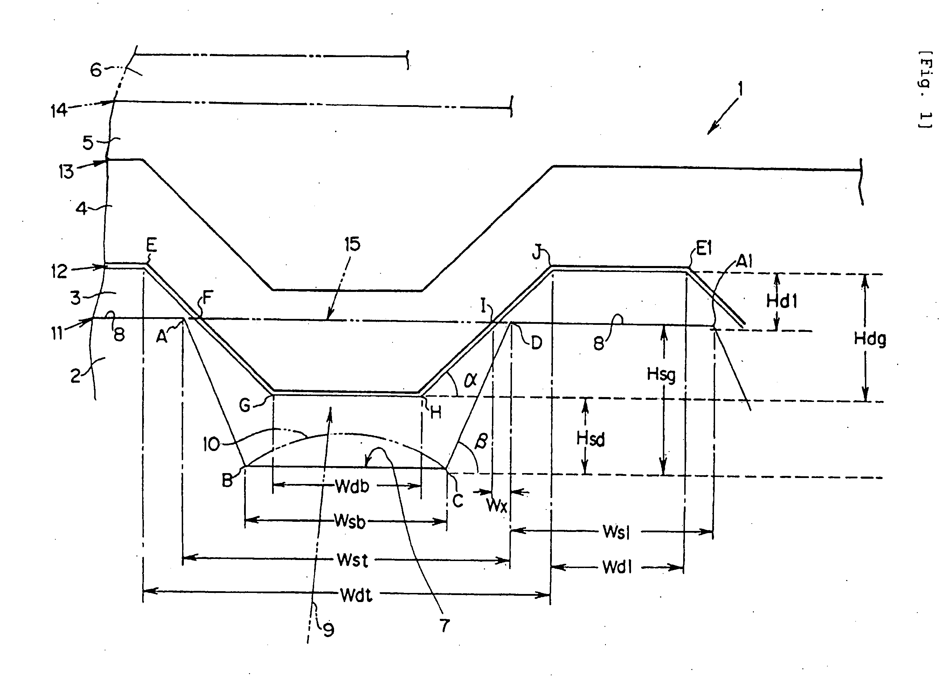

Next, an optical information recording medium 1 according to one embodiment of the invention is described below on the basis of Figs. 1 to 16.

Fig. 1 is an enlarged cross-sectional view of the principal part of a disk-like optical information recording medium 1, which is a cross-sectional view to show a cutting plane of the optical information recording medium 1 in the diameter direction; namely, Fig. 1 schematically shows a cross-sectional view cut vertically to a plane on which a pre-groove 7 is engraved and vertically to the direction of the pre-groove 7.

The optical information recording medium 1 has a light transmitting substrate 2; an optical recording layer 3 (light absorbing layer) formed on this substrate 2; a light reflecting layer 4 formed on this optical recording layer 3; and a protective layer 5 formed on this light reflecting layer 4. Incidentally, a dummy substrate 6 having a prescribed thickness is further laminated as an upper layer of the protective layer 5, thereby forming the optical information recording medium 1 so as to have a prescribed thickness as required according to the standards of DVD.

The pre-groove 7 is spirally formed on the foregoing substrate 2. A portion other than this pre-groove 7, namely a land 8 is positioned right and left of this pre-groove 7.

As illustrated in Fig. 1, when laser light 9 (recording light) is irradiated on the optical information recording medium 1, the optical recording layer 3 absorbs energy of this laser light 9 to cause the heat generation, whereby thermal modification is generated in the side of the substrate 2 to form a recording pit 10. Furthermore, while illustration is omitted in Fig. 1, the foregoing land pre-pit (LPP) for address information is formed on the land 8.

Incidentally, the substrate 2 and the optically recording layer 3 are brought into contact with each other at a first layer boundary 11.

The optical recording layer 3 and the light reflecting layer 4 are brought into contact with each other at a second layer boundary 12.

The light reflecting layer 4 and the protective layer 5 are brought into contact with each other at a third layer boundary 13.

The protective layer 5 and the dummy substrate 6 are brought into contact with each other at a fourth layer boundary 14.

The light transmitting substrate 2 is formed mainly of a resin having excellent impact resistance, which is a material having high transparency and having a refractive index against laser light falling within the range from about 1.5 to 1.7. Examples thereof include polycarbonates, glass plates, acrylic plates, and epoxy plates.

The optical recording layer 3 is a layer formed on the substrate 2, which is made of a light absorbing substance including a dye, and is a layer which upon irradiation with the laser light 9, is accompanied by heat generation, melting, sublimation, deformation, or modification. This optical recording layer 3 is formed by, for example, uniformly coating an azo based dye, a cyanine based dye, or the like dissolved in a solvent on the surface of the substrate 2 by spin coating or other means.

As a material to be used in the optical recording layer 3, arbitrary optical recording materials can be employed. However, in the invention, the material is required to have prescribed thermal decomposition temperature and heating value, details of which will be described later.

The light reflecting layer 4 is a metal film having high thermal conductivity and light reflecting properties. For example, the metal film is formed from gold, silver, copper, aluminum, or an alloy containing the same by vapor deposition, sputtering, or other means.

The protective layer 5 is formed of a resin having excellent impact resistance and bonding properties likewise the substrate 2. For example, the protective layer 5 is formed of an ultraviolet ray-curable resin by spin coating and curing the resin upon irradiation with ultraviolet rays.

The dummy substrate 6 is constituted of the same material as in the foregoing substrate 2 and secures a prescribed thickness of about 1.2 mm.

First of all, heat radiation characteristics of the optical information recording medium 1 are described.

In Fig. 1, the dimensions of the respective parts of the optical information recording medium 1 are set up as illustrated in the drawing.

In particular, with respect to the pre-groove 7, in the first layer boundary 11 between the substrate 2 and the optical recording layer 3 as shown in Fig. 1, a left-side upper corner, a left-side lower corner, a right-side lower corner and a right-side upper corner of the pre-groove 7 are designated as "point A", "point B", "point C", and "point D", respectively.

In addition, a left upper corner of the light reflecting layer 4 positioned on the land 8 is designated as "point E"; a point of intersection between an opening level line 15 (virtual line) extending from the land 8 in the same level as the first layer boundary 11 in an opening of the pre-groove 7 and a left slope of the optical reflecting layer is designated as "point F"; a left lower corner of the optical reflecting layer 4 projecting towards the direction of the substrate 2 in the pre-groove 7 is designated as "point G"; a right lower corner is designated as "point H"; a point of intersection between the opening level line 15 and a right slope of the light reflecting layer 4 is designated as "point I"; and a right upper corner of the light reflecting layer 4 positioned on the land 8 is designated as "point J".

A maximum width (a width of the optical information recording medium 1 in the diameter direction) of a concave of the light reflecting layer 4 facing on the pre-groove 7 is designated as "Wdt" (a length of the straight line EJ).

A minimum width of the concave of the light reflecting layer 4 facing on the pre-groove 7 is designated as "Wdb" (a length of the straight line GH).

A maximum width of the optical recording layer 3 in the pre-groove 7 is designated as "Wst" (a length of the straight line AD).

A minimum width of the optical recording layer 3 in the pre-groove 7 is designated as "Wsb" (a length of the straight line BC).

A width of a convex of the light reflecting layer 4 facing on the land 8 is designated as "Wdl" (a length of the straight line JE1).

A width of the optical recording layer 3 in the land 8 is designated as "Wsl" (a length of the straight line DA1).

A width of the optical recording layer 3 in the level of the first layer boundary 11 of the land 8 between the optical recording layer 3 and the light reflecting layer 4 is designated as "Wx" (a length of the straight line AF or ID).

A depth (a depth of the dye groove) from the second layer boundary 12 of the light reflecting layer 4 in the land 8 to the second layer boundary 12 in the pre-groove 7 is designated as "Hdg" (a length between the straight line JE and the straight line GH).

A depth of the optical recording layer 3 in the land 8 is designated as "Hdl" (a length between the straight line JE and the straight line DA).

A depth (a depth of the substrate groove) of the pre-groove 7 is designated as "Hsg" (a length between the straight line DA and the straight line BC).

A depth between the optical recording layer 3 and the light reflecting layer 4 in the pre-groove 7 is designated as "Hsd" (a length between the straight line GH and the straight line BC).

An angle (groove dye angle) of the slope of the light reflecting layer 4 within the optical recording layer 3 is designated as "α".

Incidentally, an angle (groove substrate angle) of the slope of the optical recording layer 3 within the substrate 2 is designated as "β".

In order to measure the cross-sectional shape of the optical information recording medium 1 and the respective dimensions, a metal-made spatula was inserted from a central hole of the optical information recording medium 1, and the portion of the second layer boundary 12 between the optical recording layer 3 and the light reflecting layer 4 was separated and taken apart.

Subsequently, the dye layer (optical recording layer 3) adhered to the side of the light reflecting layer 4 was washed away with ethanol and after removing a portion as damaged by the spatula during the separation, provided for use as a sample for measuring the shape of the dye layer.

In addition, the dye layer adhered to the side of the substrate 2 was washed away with ethanol and after removing a portion as damaged by the spatula during the separation, provided for use as a sample for measuring the shape of the substrate 2.

AFM (atomic force microscope; AUTOPROBE M5, manufactured by ThermoMicroscopes) was used for measuring the shape of each of the portions.

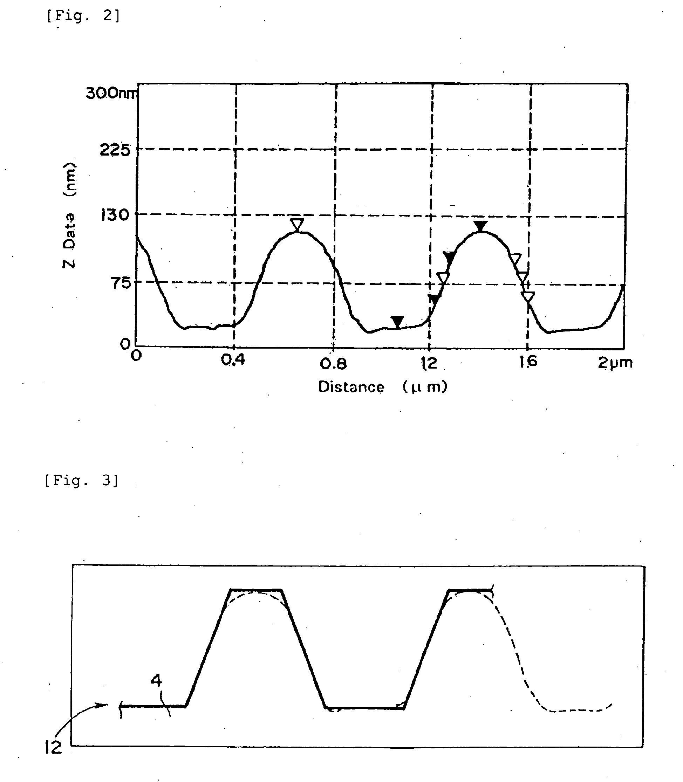

Fig. 2 is a graph to show the results of measurement of the shape of the side of the light reflecting layer 4. Though the actual shape to be measured is a curve, this curve is approximated by a straight line so as to make the calculation easy by using data of the depth, half-value width and angle.

That is, Fig. 3 is a graph to show the shape of a cross section of the light reflecting layer 4 resulting from approximation of the curve obtained in Fig. 2 by a straight line, in which a dotted light shows the actually measured shape and a solid line shows the approximated shape.

Incidentally, the shape of the substrate 2 is measured in the same measure as described previously.

A heat control design at the time of high-speed recording in the invention is hereunder described. The dye within the pre-groove 7 is rapidly heated due to a laser power of the laser light 9 in recording on the optical information recording medium 1, and the respective heat is diffused through the optical recording layer 3 or the light reflecting layer 4.

The diffused heat is transferred between tracks in adjacent portions or into the pre-groove 7, and the subject portion becomes in a so-called pre-heated state where it is warmed to some extent. When the laser light 9 is irradiated for next recording in this pre-heated state, the recording pit 10 which is different from a recording film not in the pre-heated state but in a cooled state is formed.

Furthermore, the stronger the laser power of the laser light 9, namely the faster the recording speed, the larger the quantity of heat as generated is. For example, in a medium of general DVD-R, the recording power (laser intensity) is approximately 6 to 10 mW, approximately 15 to 20 mW and approximately 25 to 30 mW in one-fold speed recording (about 3.5 m/s), 4-fold speed recording and 8-fold speed recording, respectively, and it is expected that a recording laser power of 40 mW or more is necessary in 16-fold speed recording.

In summary, in a medium adaptive with high-speed recording, it becomes more and more important that the heat as generated at the time of recording does not influence the adjacent portions.

A factor for controlling the heat as generated at the time of recording the optical information recording medium 1 is roughly classified into control in heat generation and control in heat radiation.

The control in heat generation is related to factors of material physical properties such as the heating value and decomposition temperature of the material itself of the optical recording layer 3; and the control in heat radiation is closely related to a shape factor of the optical recording layer 3 or the substrate 2, namely the thickness of the optical recording layer 3 and the shape of the second layer boundary 12 between the optical recording layer 3 and the light reflecting layer 4.

For example, the optical recording layer 3 which is a thin film of an organic dye material is interposed between the light reflecting layer 4 as a metal thin film and the substrate 2 made of a polycarbonate material. It is self-explanatory that the thermal conductivity of the metal (light reflecting layer 4) is better than that of the polycarbonate (substrate 2) which is a plastic material, and the control in heat radiation is closely related to the shape factor.

In particular, the shape of the optical recording layer 3 according to the following items is large in the degree of influence against the heat control (control in heat radiation) at the time of high-speed recording. In addition, the items (1) and (2) are especially large in the degree of influence.
(1) A dye ratio within the pre-groove 7 (dye ratio within a groove); namely, though this dye ratio within a groove is actually a volume rate of the amount of the dye within the pre-groove 7, it is equivalent to a ratio of an area of the trapezoid FGHI to an area of the trapezoid ABCD in Fig. 1.

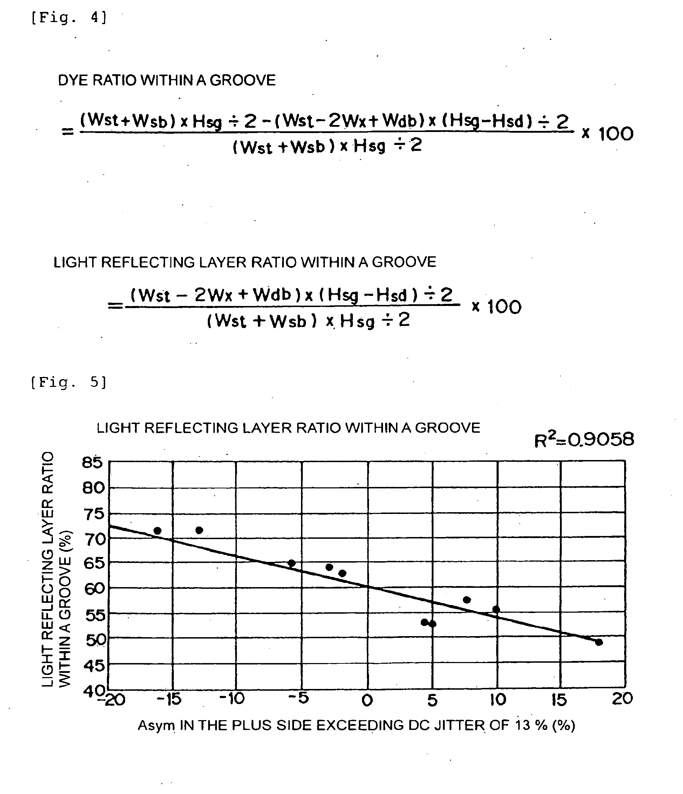

   Fig. 4 shows a calculation expression of this dye ratio within a groove.
(2) A projected depth of the reflecting film within the pre-groove 7 (Hsg - Hsd).
(3) A thickness of the dye within the pre-groove 7 (dye thickness within a groove) (Hsd).
(4) A groove dye angle within the pre-groove 7 (α).
(5) A dye leveling value [(Hsg - Hdg) ö Hsg].
(6) A ratio of the light reflecting layer 4 within the pre-groove 7 (light reflecting layer ratio within a groove).

Namely, in the invention, attention can be paid on a ratio of the light reflecting layer 4 within the pre-groove 7 in correlation with the dye ratio within a groove. As shown in the calculation expression of Fig. 4, the light reflecting layer ratio within a groove can be defined likewise the dye ratio within a groove.

In the invention, in order to cope with high-speed recording of 8-fold or more speed, it is desired that the dye ratio within a groove according to (1) is from 30 % to 63 %.

When the dye ratio within a groove is less than 30 %, it is impossible to form the recording pit 10 with a sufficient size.

When the dye ratio within a groove exceeds 63 %, it is impossible to control a DC jitter within a standardized value as described later on the basis of Fig. 5.

Next, data of the results of examination on how the shapes (in particular, the dye ratio within a groove) of the substrate 2, the optical recording layer 3 and the light reflecting layer 4 influence the high-speed recording characteristics of a medium are shown.

Fig. 5 is a graph to show a DC jitter and a dye ratio within a groove, in which an asymmetry value exceeding 13 % of the DC jitter is taken on the ordinate, while a dye ratio within a groove is taken on the abscissa.

The "DC jitter" as referred to herein means "data to clock jitter" and is a jitter value when the optical information recording medium 1 is made one revolution, which represents fluctuation of the recording pit 10. When this DC jitter exceeds 13 %, in the case of DVD-R, an error signal (PI error) as determined in the standards is liable to exceed 280 as its standardized value.

The "asymmetry value" as referred to herein represents a deviation from the position to be originally recorded with respect to an average value of pith lengths of the recording pit 10 in DVD-R of from 3T to 14T.

In order to further improve the recording sensitivity of the recording medium, it is experimentally verified that this asymmetry value is preferably shifted to the plus side as far as possible from the standpoint of the design. For that reason, in the case of high-speed recording, the asymmetry value is desirably in the range of from -5 % to 15 %; and for example, at the time of 8-fold speed, the asymmetry value is desirably shifted to the plus side from -5 %, and at the time of 16-fold speed, the asymmetry value is desirably shifted to the plus side from 5 %.

Fig. 5 shows expected results at the time of 16-fold speed recording on the basis of the results of the DC jitter as obtained at the time of one-fold speed recording, at the time of 2-fold speed recording, at the time of 4-fold speed recording, at the time of 6-fold speed recording and at time of 8-fold speed recording. As illustrated in the drawing, it is noted that when the dye ratio within a groove is reduced (the light reflecting layer ratio within a groove increases), the asymmetry value exceeding 13 % of the DC jitter is shifted to the plus side. That is, it is noted that when a projecting proportion of the light reflecting layer 4 within the pre-groove 7 increases (however, as a matter of course, there is an upper limit of, for example, 70 %), the heat as generated at the time of recording is rapidly radiated and diffused by the metal film of the light reflecting layer 4.

It can be supported from the graph of Fig. 5 that when the asymmetry value is -5 %, the dye ratio within a groove is desirably not more than 63 %, while when the asymmetry value is +5 %, the dye ratio within a groove is preferably not more than 57 %.

Next, the mutual relations among the thermal decomposition initiation temperature, the heating value, the extinction coefficient k, and the recording sensitivity or recording power of a dye material are described.

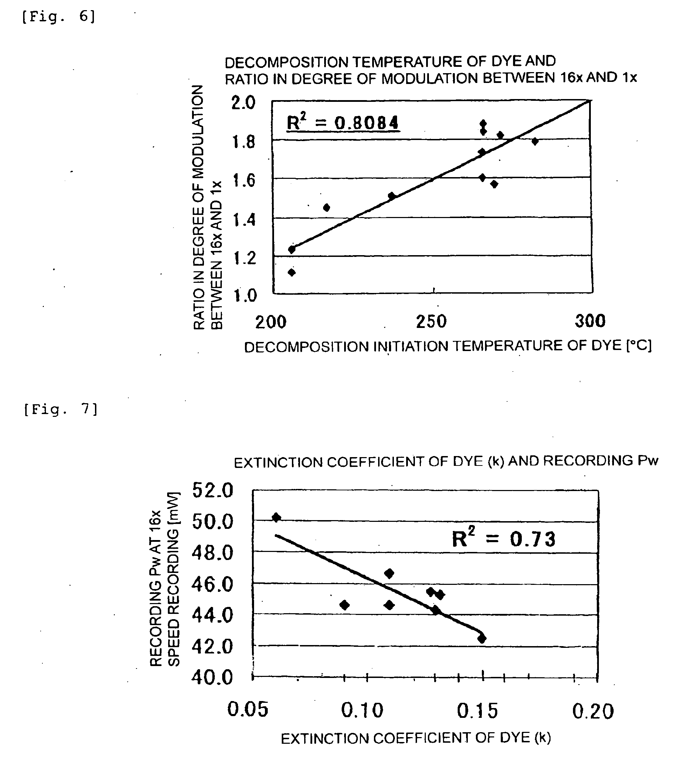

Fig. 6 is a graph to show a relation between a thermal decomposition initiation temperature of a dye (dye thermal decomposition initiation temperature) and a ratio in degree of modulation between 16-fold speed and one-fold speed. It is noted that when the thermal decomposition initiation temperature becomes low, the size of the recording pit 10 at the time of low-speed recording and the size of the recording pit 10 at the time of high-speed recording become close to each other, that is, a ratio of the degree of modulation in high-speed recording to the degree of modulation in low-speed recording becomes small. When the thermal decomposition initiation temperature becomes low, sufficient dye decomposition can be brought even at a low laser power, and the laser power can be controlled at low levels even at the time of high-speed recording likewise the case at the time of low-speed recording. Thus, it may be considered that the size of the recording pit 10 becomes controllable without causing scattering.

In the case of basic write strategy of DVD, the degree of modulation which is satisfied with low-speed recording, namely one-fold speed recording (1x speed recording) is 50 % or more. In the case where influences due to semiconductor laser in recording drive and other individual difference are taken into consideration, for the purpose of stably securing the recording characteristics, the degree of modulation at the time of one-fold speed recording is preferably 55 % or more.

For the purpose of securing an LPP signal at the time of high-speed recording, namely at the time of 16-fold speed recording (16x speed recording), the degree of modulation is not more than 85 %. Thus, it is necessary to control a ratio of the degree of modulation of 16x speed to the degree of modulation of 1x speed (degree of modulation in 16x speed recording/degree of modulation in 1x speed recording) at not more than 1.7, and preferably not more than 1.6. Furthermore, since the degree of modulation which is satisfied with recordings other than the 1x speed recording is 60 % or more, the degree of modulation of 16x speed must be at least 60 %, and the ratio of the degree of modulation of 16x speed to the degree of modulation of 1x speed must be at least 1.1.

Judging from the graph of Fig. 6, the ratio in degree of modulation must be in the range of from 1.1 to 1.7, and especially from 1.1 to 1.6, and the thermal decomposition initiation temperature of the dye must be in the range of from 190 to 260°C, and preferably from 200 to 250°C. When the thermal decomposition initiation temperature of the dye is lower than 190°C, recording is hindered, while when it exceeds 260°C, AR cannot be taken in high-speed recording. In the optical information recording medium 1 according to the invention, since the degree of modulation is regulated in this way, it is stably adaptive with a wide range of recording speed of from 1x speed recording to 16x speed recording.

Moreover, the dye within the pre-groove 7 is rapidly heated by a laser power in recording on the optical information recording medium 1, and the recording pit 10 is formed due to that heat. The recording power is changed by dye physical properties such as the extinction coefficient k of the dye, the thermal decomposition initiation temperature of the dye, and the heating value and the shape of the dye film thickness in the optical recording layer 3, and the size of the recording pit 10 as formed is also changed.

Since the recording laser power due to the semiconductor laser itself is limited, it is recommended to control the recording power at approximately 40 to 50 mW in 16x recording.

Furthermore, in order to secure a reflectance (45 % or more according to the standards), the extinction coefficient k must be controlled at a fixed value or less. In addition, in 16x recording, because of the influence of a high recording laser power thereof, heat as generated must be controlled such that it does not affect the portion of the adjacent recording pit 10 and the like. In order to control this generated heat, the control in heat radiation through the light reflecting layer 4 as described previously on the basis of Figs. 1 to 5 is effective. By not only controlling the foregoing thermal decomposition initiation temperature within the range of from 190 to 260°C but also regulating the dye ratio within a groove at from 30 % to 63 %, it is possible to further limit the ratio in degree of modulation at the time of heat generation to a preferred range.

Fig. 7 is a graph to show a relation between an extinction coefficient k of the dye and a recording power (at the time of 16-fold speed recording). As illustrated in the drawing, when the extinction coefficient k is small, the recording power increases (the recording sensitivity is deteriorated). A targeted value of the recording power which is satisfied with 16x speed recording is not more than 50 mW as a value according to the standards, and preferably not more than 47 mW. Judging from the graph of Fig. 7, the controllable range adaptive with the recording power (recording sensitivity) is the case where the extinction coefficient k is 0.09 or more in recording and reproducing wavelengths by laser light (for example, 660 nm in DVD). Furthermore, in order to obtain a standardized reflectance of 45 % or more, the extinction coefficient k of the dye must be not more than 0.15 in recording and reproducing wavelengths of laser light. Incidentally, in the invention, while an index of the extinction coefficient k is 660 nm as one detection wavelength, it should not be construed that the subject of the invention is limited to DVD.

Next, the relation between the heating value of the dye and the sensitivity in 16x recording in the case where the extinction coefficient k is identical was verified.

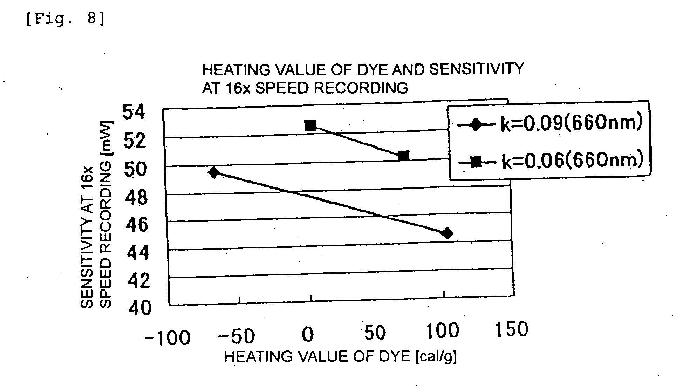

Fig. 8 is a graph to show a relation between the heating value of the dye and the recording sensitivity (recording power) (at the time of 16-fold speed recording). As illustrated in the drawing, in the case where the extinction coefficient k is identical (k = 0.09 or k = 0.06), it is noted that when the heating value of the dye is small, the recording sensitivity is largely deteriorated (the recording power increases). In the invention, the heating value of the dye must be from 20 to 150 cal/g, preferably from 50 to 100 cal/g, and more preferably from 70 to 100 cal/g.

That is, a targeted value of the recording sensitivity which is satisfied with 16x speed recording is not more than 47 mW in terms of the recording power. Judging from the graph of Fig. 8, the heating value must be at least 20 cal/g. When the heating value of the dye is less than 20 cal/g, a laser output must be increased.

Furthermore, as a result of experiments, even if the thermal decomposition initiation temperature is low, when the heating value exceeds 150 cal/g, the decomposition of the dye excessively proceeds. As a result, the degree of modulation becomes excessively large.

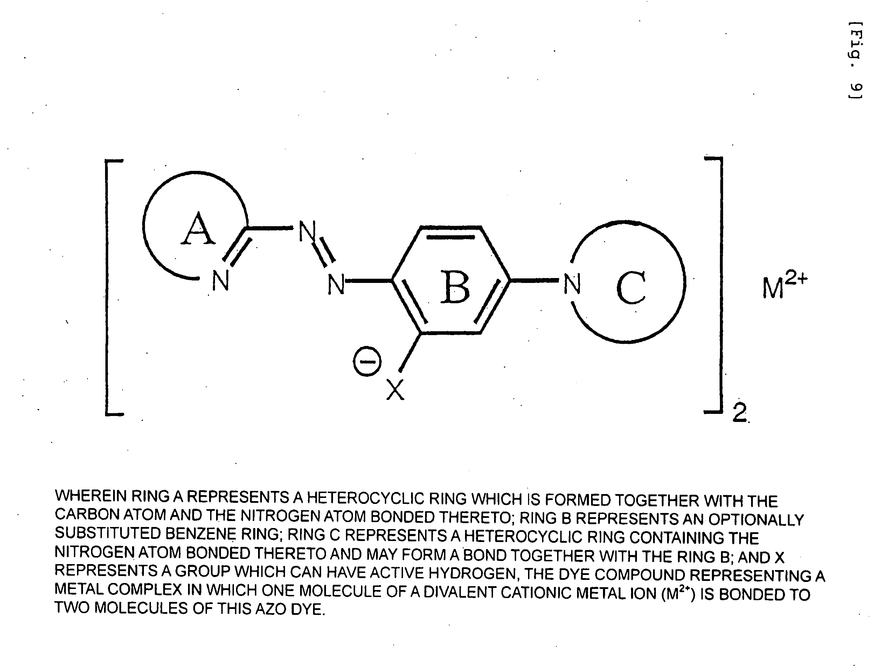

As one example of the dye which is satisfied with the ranges in the optical information recording medium 1 of the invention, such as the thermal decomposition initiation temperature, the heating value, and the extinction coefficient k, an organic dye material (azo dye) as shown in Fig. 9 can be enumerated.

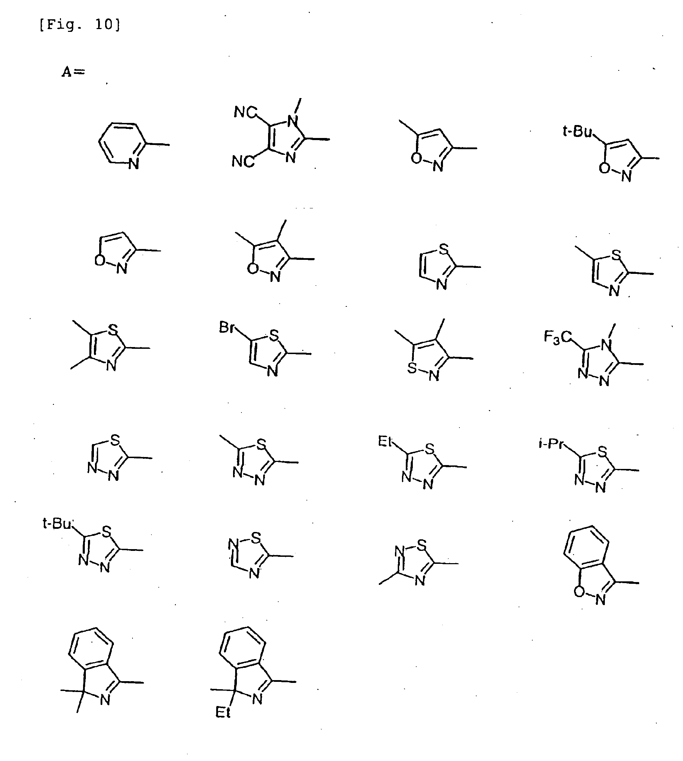

Incidentally, Fig. 10 is an explanatory drawing enumerating specific examples of "A" in Fig. 9. However, those other than the two rings as shown in the upper portion of the left side in the drawing are preferable from the standpoint of practical use.

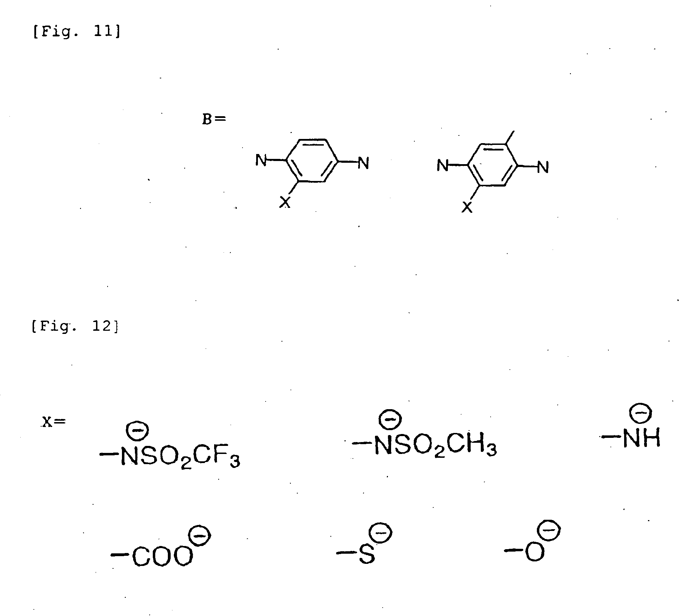

Fig. 11 is an explanatory drawing enumerating specific examples of "B" in Fig. 9.

Fig. 12 is an explanatory drawing enumerating specific examples of "X" in Fig. 9. However, the two groups as shown in the upper portion of the left side in the drawing are preferable from the standpoint of practical use.

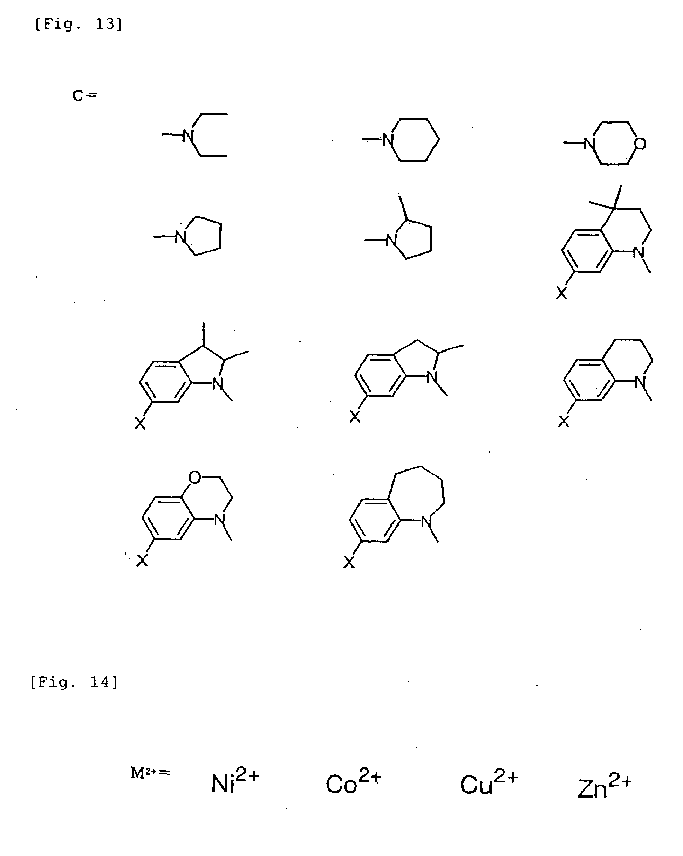

Fig. 13 is an explanatory drawing enumerating specific examples of "C" in Fig. 9. However, those other than the five monocycles as shown in the upper portion of the right and right sides in the drawing are preferable from the standpoint of practical use.

Fig. 14 is an explanatory drawing enumerating specific examples of "M²⁺" in Fig. 9. However, Ni²⁺ is preferable from the standpoint of practical use.

### EXAMPLES

Next, specific working examples are described.

### (Example 1)

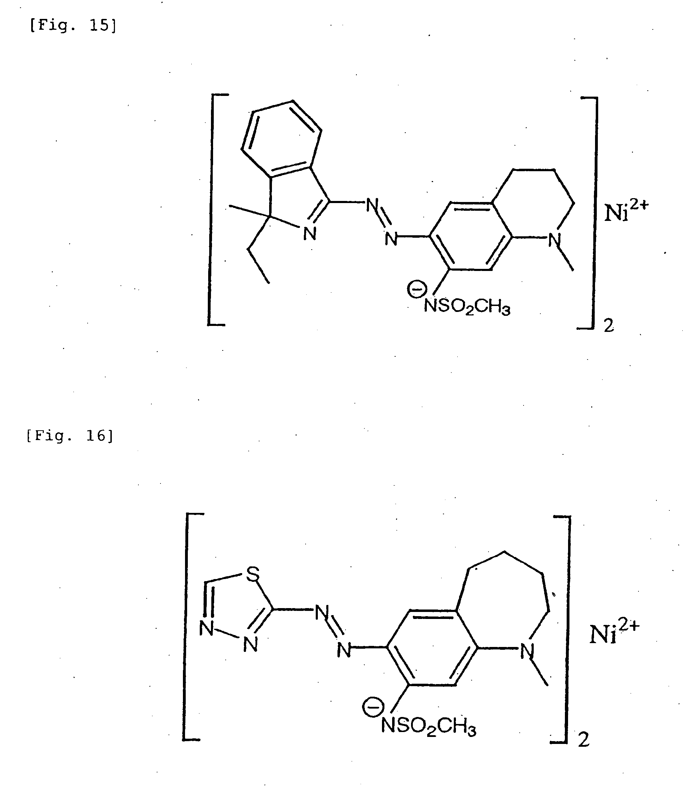

0.25 g of a dye compound I (azo dye) as shown in Fig. 15 was dissolved in 10 mL of 2,2,2,3-tetrafluoro-1-propanol to prepare a coating solution.

A thermal decomposition initiation temperature of this dye compound I was analyzed by using TG-DTA (manufactured by Rigaku Corporation). As a result, it was found that thermal decomposition started at a temperature of 251.4°C.

The decomposing and heating value of the dye compound I was analyzed by DSC (differential scanning calorimeter, manufactured by MAC Science Co., Ltd.). As a result, the heating value was found to be 71.4 cal/g.

The dye compound I had an extinction coefficient k of 0.13 at a recording wavelength of 660 nm.

The coating solution of this dye compound I was coated on a polycarbonate-made disk-like substrate 2 having an outer diameter of 120 mm and a thickness of 0.6 mm and having a continuous guide groove (pre-groove 7) at a number of revolutions of 2,000 rpm by spin coating, thereby forming an optical recording layer 3 having an average dye film thickness of about 50 nm.

In addition, silver (Ag) was sputtered on this optical recording layer 3, thereby forming a light reflecting layer 4 having a thickness of 100 nm.

In addition, an ultraviolet ray-curable resin SD-318 (manufactured by Dainippon Ink and Chemicals, Incorporated) was spin coated on this light reflecting layer 4 and then cured upon irradiation with ultraviolet rays, thereby forming a protective layer 5.

An adhesive made of an ultraviolet ray-curable resin was coated on the surface of this protective layer 5, on which was then stuck a dummy substrate 6 having the same material quality and shape as those described above. This adhesive was cured upon irradiation with ultraviolet rays, thereby preparing a write-once optical information recording medium 1.

With respect to the optical information recording medium 1 having the optical recording layer 3 formed thereon in this way, an EFM (eight to fourteen modulation) signal was recorded thereon at a linear velocity of 3.49 m/s (one-fold speed) by using a disk evaluation system (DDU-1000) as manufactured by Pulstec Industrial Co., Ltd. and having semiconductor laser (NA = 0.65) with a wavelength of 660 nm mounted thereon. As a result, a laser power was 6.5 mW.

After recording, the signal was reproduced at a laser output of 0.7 mW by using the same evaluation system, thereby measuring a reflectance, a degree of modulation, an error rate, and a jitter. As a result, good values were exhibited in all of them.

Furthermore, high-speed recording was carried out at a linear velocity of 28 m/s (8-fold speed). As a result, a laser power was 24.5 mW.

After recording, the signal was reproduced at a laser output of 0.7 mW by using the same evaluation system, thereby measuring a reflectance, a degree of modulation, an error rate, and a jitter. As a result, good values were exhibited in all of them. In particular, with respect to the degree of modulation, a ratio of the degree of modulation at a maximum speed (8-fold speed) to the degree of modulation at a minimum speed (1-fold speed) [(degree of modulation at the time of maximum-speed recording)/(degree of modulation at the time of minimum speed recording)] was 1.6.

### (Comparative Example 1)

The same procedures as in Example 1 were followed, except for using a dye compound II (azo dye) as shown in Fig. 16 in place of the dye compound I (azo dye) as shown in Fig. 15.

This dye compound II had a thermal decomposition initiation temperature of 275.1°C, a decomposing and heating value of 121.5 cal/g, and an extinction coefficient k of 0.14 at a recording wavelength of 660 nm.

A write-once optical information recording medium 1 was prepared by using the resulting coating solution and evaluated in the same manner as in the foregoing Example 1. As a result, because of an excessively high thermal decomposition initiation temperature, a degree of modulation at the time of 1x speed recording became small as 42 % so that sufficient characteristics could not be obtained.

### (Comparative Example 2)

The same procedures as in Comparative Example 1 were followed, except for changing the dye film thickness in Comparative Example 1 from about 50 nm to 60 nm.

This dye compound II had a thermal decomposition initiation temperature, a decomposing and a heating value and extinction coefficient k the same as those in Comparative Example 1.

A write-once optical information recording medium 1 was prepared by using the resulting coating solution and evaluated in the same manner as in the foregoing Example 1. As a result, since the write-once optical information recording medium 1 was formed so as to have a sufficiently thick dye film thickness, a degree of modulation at the time of 1x speed recording was small as 49 %; a degree of modulation at the time of 16x speed recording was so high as 87 %; a ratio of the degree of modulation at a maximum speed (8-fold speed) to the degree of modulation at a minimum speed (1-fold speed) [(degree of modulation at the time of maximum-speed recording)/(degree of modulation at the time of minimum speed recording)] became 1.8; a signal amplitude of a land pre-pit (LPP) signal was lowered; and AR became zero. Thus, sufficient characteristics could not be obtained.

Incidentally, with respect to the foregoing results, it is desired that measurement errors are taken into consideration. That is, it is preferred that measurement errors of approximately ±5 % against the numeral values as obtained in the foregoing measurement results are taken into consideration.

Furthermore, a maximum speed and a minimum speed of an optical information recording medium may be selected within recordable velocity ranges indicated in that recording medium or package. However, they are not limited to these ranges but may be selected within recordable velocity ranges during actual recording.

## Claims

1. An optical information recording medium comprising a substrate having light transmitting properties and having a pre-groove formed thereon;
an optical recording layer containing a dye capable of absorbing laser light as provided on the substrate; and
a light reflecting layer capable of reflecting the laser light as provided on the optical recording layer,
the optical information recording medium being able to record optically readable information by irradiating the optical recording layer with the laser light through the substrate, wherein
a ratio of a degree of modulation at a maximum speed of recording speed by the laser light to a degree of modulation at a minimum speed of recording speed by the laser light (degree of modulation at the time of maximum-speed recording/degree of modulation at the time of minimum-speed recording) is from 1.1 to 1.7, wherein a ratio of a cross-sectional area occupied by the optical recording layer to a cross-sectional area of the pre-groove in a cutting plane of the optical information recording medium in the diameter direction (dye ratio within a groove) is from 57 % to 63 % and wherein the dye is a dye compound represented by the following structural formula: 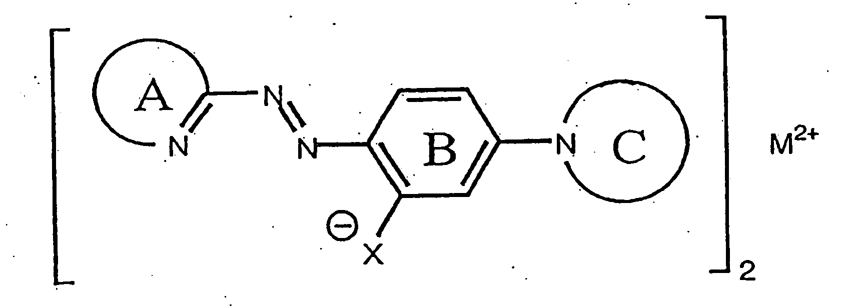 wherein ring A represents a heterocyclic ring which is formed together with the carbon atom and the nitrogen atom bonded thereto; ring B represents an optionally substituted benzene ring; ring C represents a heterocyclic ring containing the nitrogen atom bonded thereto and may form a bond together with the ring B; and X represents a group which can have active hydrogen, the dye compound representing a metal complex in which one molecule of a divalent cationic metal ion (M²⁺) is bonded to two molecules of this azo dye and wherein said maximum speed is 16-times the reference linear velocity and said minimum speed is the reference linear velocity.

2. The optical information recording medium according to claim 1, wherein the ratio of a degree of modulation at a maximum speed of recording speed by the laser light to a degree of modulation at a minimum speed of recording speed by the laser light (degree of modulation at the time of maximum-speed recording/degree of modulation at the time of minimum-speed recording) is from 1.1 to 1.6.

3. The optical information medium according to claim 1 or 2, wherein the optical recording layer has a thermal decomposition initiation temperature of from 190 to 260°C and a heating value of from 20 to 150 cal/g.

4. The optical information medium according to claim 1 or 2, wherein the optical recording layer has an extinction coefficient k of not more than 0.2 in recording and reproducing wavelengths of the laser light.

## Patentansprüche

1. Optisches Informationsaufzeichnungsmedium, umfassend ein Substrat mit lichtdurchlässigen Eigenschaften und mit einer darauf gebildeten Vor-Vertiefung bzw. Vor-Rille,
eine optische Aufzeichnungsschicht, enthaltend einen Farbstoff, der befähigt ist, Laserlicht zu absorbieren, wie auf dem Substrat angeordnet, und
eine lichtreflektierende Schicht, die befähigt ist, das Laserlicht zu reflektieren, wie auf der optischen Aufzeichnungsschicht angeordnet,
wobei das optische Informationsaufzeichnungsmedium in der Lage ist, optisch lesbare Information aufzuzeichnen, indem die optische Aufzeichnungsschicht mit dem Laserlicht durch das Substrat belichtet wird, wobei
ein Verhältnis eines Modulationsgrads bei einer Maximalgeschwindigkeit der Aufzeichnungsgeschwindigkeit durch das Laserlicht zu einem Modulationsgrad bei einer Minimalgeschwindigkeit der Aufzeichnungsgeschwindigkeit durch das Laserlicht (Modulationsgrad zum Zeitpunkt des Maximalgeschwindigkeitsaufzeichnens/ Modulationsgrad zum Zeitpunkt des Minimalgeschwindigkeitsaufzeichnens) von 1,1 bis 1,7 beträgt,
wobei ein Verhältnis eines Querschnittsbereichs, eingenommen von der optischen Aufzeichnungsschicht, zu einem Querschnittsbereich der Vor-Vertiefung bzw. Vor-Rille in einer Schnittebene des optischen Informationsaufzeichnungsmediums in der Durchmesserrichtung (Farbstoffverhältnis innerhalb einer Vertiefung) von 57% bis 63% beträgt, und
wobei der Farbstoff eine Farbstoffverbindung ist, dargestellt durch die folgende Strukturformel: 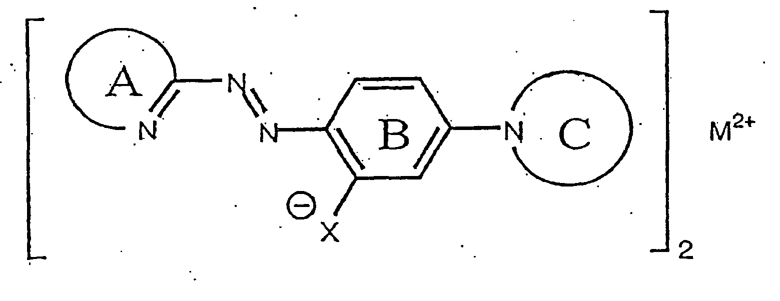 worin Ring A einen heterocyclischen Ring darstellt, welcher zusammen mit dem Kohlenstoffatom und dem daran gebundenen Stickstoffatom gebildet wird, der Ring B einen gegebenenfalls substituierten Benzolring darstellt, der Ring C einen heterocyclischen Ring darstellt, enthaltend das Stickstoffatom gebunden daran, und eine Bindung zusammen mit dem Ring B bilden kann, und X eine Gruppe darstellt, welche einen aktiven Wasserstoff aufweisen kann, wobei die Farbstoffverbindung einen Metallkomplex darstellt, worin ein Molekül eines zweiwertigen kationischen Metallions (M²⁺) an zwei Moleküle dieses Azofarbstoffs gebunden ist, und
wobei die Maximalgeschwindigkeit 16-mal die lineare Referenzgeschwindigkeit ist und die Minimalgeschwindigkeit die lineare Referenzgeschwindigkeit ist.

2. Optisches Informationsaufzeichnungsmedium gemäß Anspruch 1, wobei dasrhältnis eines Modulationsgrads bei einer Maximalgeschwindigkeit der Aufzeichnungsgeschwindigkeit durch das Laserlicht zu einem Modulationsgrad bei einer Minimalgeschwindigkeit der Aufzeichnungsgeschwindigkeit durch das Laserlicht (Modulationsgrad zum Zeitpunkt des Maximalgeschwindigkeitsaufzeichnens/ Modulationsgrad zum Zeitpunkt des Minimalgeschwindigkeitsaufzeichnens) von 1,1 bis 1,6 beträgt,

3. Optisches Informationsaufzeichnungsmedium gemäß Anspruch 1 oder 2, wobei die optische Aufzeichnungsschicht eine thermische Zersetzungsinitiierungstemperatur von 190°C bis 260°C und einen Heizwert von 20 bis 150 cal/g aufweist.

4. Optisches Informationsaufzeichnungsmedium gemäß Anspruch 1 oder 2, wobei die optische Aufzeichnungsschicht einen Extinktionskoeffizienten k von nicht mehr als 0,2 im Aufzeichnen und Reproduzieren von Wellenlängen des Laserlichts aufweist.

## Revendications

1. Support d'enregistrement optique d'informations comprenant un substrat doté de propriétés de transmission de lumière et d'un pré-sillon formé sur celui-ci;
une couche d'enregistrement optique contenant un colorant capable d'absorber une lumière laser telle que fournie sur le substrat; et
une couche réfléchissant la lumière capable de réfléchir la lumière laser telle que fournie sur la couche d'enregistrement optique,
le support d'enregistrement optique d'informations étant apte à enregistrer des informations lisibles optiquement en irradiant la couche d'enregistrement optique au moyen de la lumière laser à travers le substrat,
un rapport entre un degré de modulation à une vitesse maximum de la vitesse d'enregistrement par la lumière laser et un degré de modulation à une vitesse minimum de la vitesse d'enregistrement par la lumière laser (degré de modulation au moment de l'enregistrement à vitesse maximum / degré de modulation au moment de l'enregistrement à vitesse minimum) étant compris entre 1,1 et 1,7, un rapport entre une surface de section transversale occupée par la couche d'enregistrement optique et une surface de section transversale du pré-sillon dans un plan de coupe du support d'enregistrement optique d'informations dans la direction du diamètre (ratio de colorant dans un sillon) étant de 57% à 63%, et le colorant étant un composé colorant représenté par la formule structurale suivante : 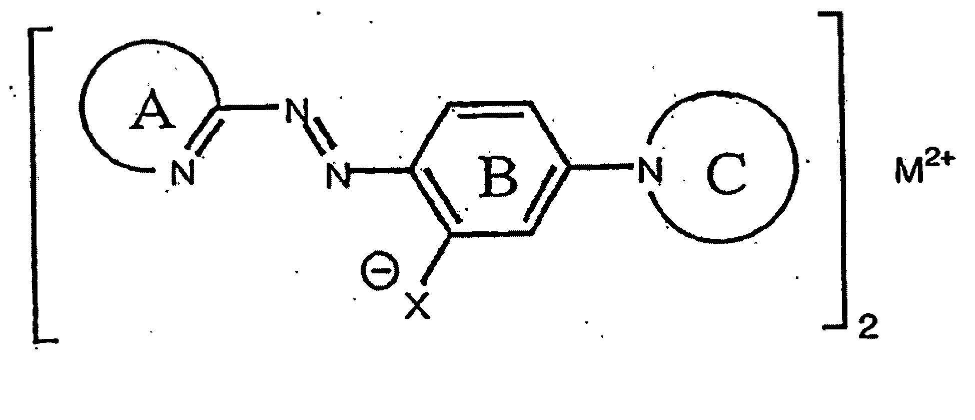
dans laquelle le cycle A représente un cycle hétérocyclique qui est formé avec l'atome de carbone et l'atome d'azote liés à celui-ci; le cycle B représente un cycle benzénique éventuellement substitué; le cycle C représente un cycle hétérocyclique contenant l'atome d'azote lié à celui-ci et peut former une liaison avec le cycle B; et X représente un groupe pouvant comporter de l'hydrogène actif, le composé colorant représentant un complexe métallique dans lequel une molécule d'un ion métallique cationique divalent (M²⁺) est lié à deux molécules de ce colorant azoïque, et ladite vitesse maximum étant égale à 16 fois la vélocité linéaire de référence et ladite vitesse minimum étant la vélocité linéaire de référence.

2. Support d'enregistrement optique d'informations selon la revendication 1, dans lequel le rapport entre un degré de modulation à une vitesse maximum de la vitesse d'enregistrement par la lumière laser et un degré de modulation à une vitesse minimum de la vitesse d'enregistrement par la lumière laser (degré de modulation au moment de l'enregistrement à vitesse maximum / degré de modulation au moment de l'enregistrement à vitesse minimum) est compris entre 1,1 et 1,6.

3. Support d'enregistrement optique d'informations selon la revendication 1 ou 2, dans lequel la couche d'enregistrement optique a une température d'initiation de décomposition thermique comprise entre 190 et 260°C et une valeur calorifique comprise entre 20 et 150 cal/g.

4. Support d'enregistrement optique d'informations selon la revendication 1 ou 2, dans lequel la couche d'enregistrement optique a un coefficient d'extinction k n'excédant pas 0,2 dans des longueurs d'onde de la lumière laser d'enregistrement et de reproduction.
